# EUROPÄISCHE PATENTSCHRIFT

(11) **EP 0 873 510 B1**
(45) Veröffentlichungstag und Bekanntmachung des Hinweises auf die Patenterteilung: **01.02.2006**
(21) Anmeldenummer: 97947035.8
(22) Anmeldetag: 30.10.1997
(51) Int. Cl.: G01N 21/90

(54) **INSPEKTIONSVORRICHTUNG FÜR FLASCHEN ODER DGL.**
DEVICE FOR INSPECTING BOTTLES AND THE LIKE
DISPOSITIF D'INSPECTION DE BOUTEILLES ET AUTRES ARTICLES SIMILAIRES

(30) Priorität: 30.10.1996 DE 29618394 U; 19.09.1997 DE 29716878 U
(43) Veröffentlichungstag der Anmeldung: 28.10.1998
(60) Teilanmeldung: 03023096.5
(73) Patentinhaber: Krones Aktiengesellschaft, 93068 Neutraubling (DE)
(72) Erfinder: LÖLL, Josef, D-93055 Regensburg (DE)
(86) Internationale Anmeldenummer: PCT/EP1997/005992
(87) Internationale Veröffentlichungsnummer: WO 1998/019150

(56) Entgegenhaltungen:
- WO-A-91/08468
- DE-U- 9 313 115
- DE-U- 29 502 708
- GB-A- 2 288 016
- US-A- 4 025 201
- US-A- 4 750 035
- PATENT ABSTRACTS OF JAPAN vol. 17, no. 109 (P-1497), 5.März 1993 & JP 04 297810 A (MITSUBISHI MATERIALS CORP), 21.Oktober 1992,

## Beschreibung

Die Neuerung betrifft eine Inspektionsvorrichtung für Flaschen oder dgl. mit einer Lichtquelle, einem Bildaufnahmeelement mit zugeordneter Bildauswerteinrichtung und einem einstückigen, optischen Körper, der aus einem lichtdurchlässigen Material besteht. Eine derartige Vorrichtung ist aus der europäischen Offenlegungsschrift EP-0 657 732 bekannt. Die in den Fig. 11 bis 14 dieses Dokuments in verschiedenen Abwandlungen gezeigte Vorrichtung besitzt einen ringförmigen optischen Körper mit einer Ein- und Austrittsfläche für die Strahlengänge. Die innere und äußere Ringfläche des Körpers ist verspiegelt, so daß ein von der Flasche kommender Strahlengang nach dem Eintritt in den optischen Körper durch Spiegelung in Richtung zu dem Bildaufnahmeelement umgelenkt wird. Die notwendige Beschichtung des Körpers an den zur Spiegelung vorgesehenen Flächen verursacht nicht unerhebliche Kosten. Wird die Beschichtung bei der Montage oder im Betrieb verkratzt, ist der optische Körper unbrauchbar und muß ersetzt werden. Ein weiterer Nachteil dieser Inspektionsvorrichtung ergibt sich aus der höhengleichen Anordnung der einander gegenüberliegenden Spiegelflächen, wodurch ein relativ großer Abstand zwischen der abzubildenden Flaschenmündungsseitenwand und dem Abbildungskörper notwendig ist. Außerdem kann der zu inspizierende Mündungsseitenwandbereich nur aus einem ungünstigen Winkel erfaßt werden, wodurch die Abbildungsqualität beschränkt ist. Ferner wird das gesamte in den optischen Abbildungskörper gelangende Licht -auch vagabundierendes Licht- gespiegelt. Diese Vorrichtung ist auch nicht in der Lage, eine Etikettenkontrolle oder dgl. auszuführen, um am Flaschenrumpf haftende Etiketten u.ä. zu überprüfen.

Aus DE 295 02 708 Ul ist eine Inspektionsvorrichtung zur Kontrolle des Kopfbereiches von durchleuchtbaren Flaschen oder dgl. bekannt. In diesem Dokument wird die Möglichkeit offenbart, den Kopfbereich einer Flasche anstelle von stationären Spiegeln durch um den Umfang des Kopfbereiches einer Flasche versetzt oberhalb der Mündung angeordnete Glasfasern auf eine Kamera abzubilden. Nachteilig daran ist der Umstand, dass jede der dafür notwendigen zahlreichen Glasfasern nur einen sehr kleinen Teilbereich der Umfangsfläche einer Flasche abbildet, so dass eine vollumfängliche Abbildung nur durch eine alle aus den einzelenen Glasfasern austretenden Lichtstrahlen zu einem gemeinsamen Bild bündelnde Linsenoptik erreicht werden kann. Eine derartige Linsenoptik verursacht zusätzlichen Aufwand. Ein weiterer Nachteil ist darin zu sehen, dass die Vielzahl der Glasfasern einen erheblichen Montageaufwand zur exakten Einjustierung der einzelnen Glasfasern erfordert.

Demzufolge liegt der Neuerung die Aufgabe zugrunde, eine Inspektionsvorrichtung diesbezüglich zu verbessern.

Diese Aufgabe wird dadurch gelöst, mittels einer Auflichtbeleuchtung die Mantelfläche einer Flasche vollumfänglich erfasst und auf der Bildaufnahmeeinrichtung abgebildet wird.

Weil im Gegensatz zum bekannten Stand der Technik auf verspiegelte Flächen verzichtet werden kann, können zum einen die zu prüfenden Flaschenumfangsbereiche von oben durch den optischen Körper hindurch beleuchtet werden, mit dem Vorzug, daß eine problemlose Ringbeleuchtung realisierbar ist, und zum anderen werden undefinierte, für die Inspektion unerwünschte Lichtstrahlen bei Überschreitung des für die Totalreflexion maßgebenden Grenzwinkels nicht in Richtung zum Bildaufnahmeelement reflektiert, sondern können aus dem optischen Körper ins Freie austreten.

Weitere vorteilhafte Ausgestaltungen der Neuerung sind Gegenstand der Unteransprüche.

Nachfolgend werden bevorzugte Ausführungsbeispiele anhand der Figuren erläutert. Es zeigt:
Fig. 1a einen vertikalen Schnitt durch einen optischen Körper für die Mündungsseitenwandinspektion von Flaschen, insbesondere mit einem Schraubgewinde,
Fig. 1b eine zweite Ausführung eines optischen Körpers mit dem zusätzlich auch eine Innenseitenwand-, Boden- und Mündungsdichtflächeninspektion bei transparenten Flaschenmöglich ist,
Fig.1c bis 1d einen optischen Körper entsprechend der Fig. 1a mit einem zweiten, konzentrischen optischen Körper in drei verschiedenen Ausführungen und
Fig. 2a bis d einen vertikalen Schnitt durch einen optischen Körper zur Flaschenseitenwandabbildung.

Der in Fig. la erkennbare rotationssymmetrische Körper 4 ist koaxial unterhalb einer nach unten gerichteten CCD-Kamera 2 angeordnet. Die Bildaufnahme erfolgt in dem Augenblick, wenn eine zu prüfende, leere Flasche 1 mit ihrer Hochachse 1' während dem kontinuierlich erfolgenden Transport kurzzeitig im wesentlichen mit der optischen Achse der Kamera 2 und der Symmetrieachse des Körpers 4 fluchtet. Zur Bildauswertung wird eine elektronische Auswerteinrichtung 2' eingesetzt, durch die dann eine "Gut-Schlecht"-Klassifizierung der abgebildeten Flaschen erfolgt.

Die Beleuchtung einer leeren, oben offenen Flasche 1 aus transparentem Material erfolgt durch eine Lichtquelle 3a, die unter dem Flaschenboden angeordnet ist oder durch eine seitlich neben dem zu prüfenden Flaschenwandabschnitt positionierte Lichtquelle 3c. Ferner kann der entsprechende Flaschenwandabschnitt schräg von unten nach oben, oder umgekehrt, schräg von oben nach unten durch unterhalb bzw. oberhalb der Flaschenmündung plazierte Lichtquellen 3b bzw. 3d beleuchtet werden. Weil der optische Körper 4 keine verspiegelten Flächen besitzt, kann die für eine Beleuchtung von oben notwendige Lichtquelle 3d auch oberhalb des optischen Körpers angeordnet werden und, da sie sich dort außerhalb der beispielsweise geradlinigen Flaschenförderbahn befindet, idealerweise ringförmig nach Art eines Toruskörpers ausgebildet sein. Damit ist eine über den gesamten Umfang gleichmäßige Ausleuchtung, vor allem der Mündungsfläche bei einer Dichtflächeninspektion, erreichbar.

Die zuvor genannten verschiedenen Beleuchtungsvarianten können nicht nur alternativ, sondern auch in geeigneter Kombination in Abhängigkeit der Flascheneigenschaften (Kontur etc.) und der zu kontrollierenden Bereiche zum Einsatz kommen. Sind die Flaschen nicht durchleuchtbar, erfolgt die Beleuchtung im Auflichtverfahren durch die Lichtquellen 3d bis 3d, während die Bodenlichtquelle dann entfallen kann.

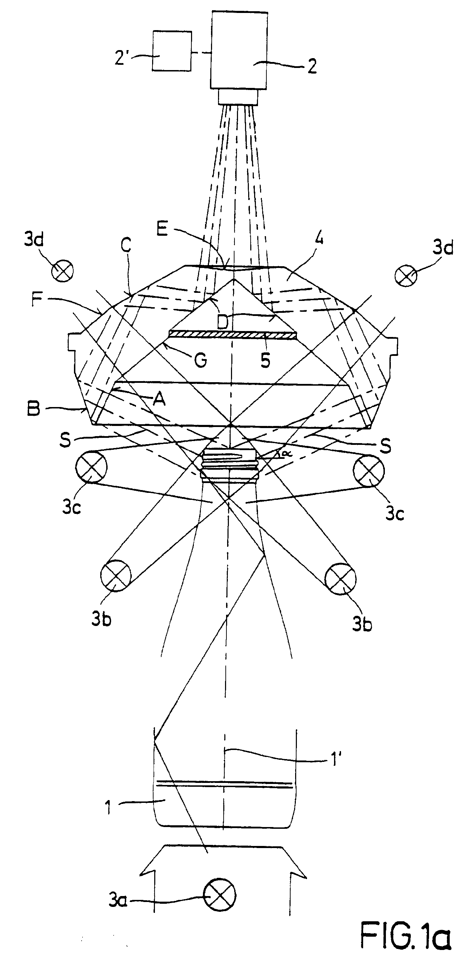

Der in Fig. 1a erkennbare Strahlengangverlauf S wird durch die gewählte Kontur des optischen Körpers 4 bestimmt, der drei derart geneigte Flächenabschnitte B, C, D besitzt, daß ein von der Mündungsseitenwand der Flasche 1 kommender, von unten schräg nach oben gerichtet in den aus Glas oder Kunststoff , z.B. Acrylglas, bestehenden Körper 4 eintretender Strahlengang S durch Totalreflexion an den Flächen B, C, D insgesamt dreimal umgelenkt wird und schließlich nach oben zur Kamera 2 konvergierend aus dem Körper 4 austritt. Es versteht sich, daß die Neigung der drei genannten Flächen B, C, D in Bezug auf den einfallenden Strahlengang S so gewählt ist, daß der für die Totalreflexion maßgebende, materialabhängige Grenzwinkel nicht unterschritten wird. Besonders brauchbare Abbildungen sind erreichbar, wenn sich der Neigungswinkel der Mittelachse des auf den Mündungsbereich treffenden Strahlengangabschnitts in einem Bereich von 15 bis 30 Grad, bezogen auf die horizontale Mündungsebene, bewegt, insbesondere wenn er 27 Grad beträgt.

Dadurch, daß der erste Flächenabschnitt B tiefer angeordnet ist als der zweite, ebenfalls an der Außenfläche liegende Flächenabschnitt C, kann der untere Rand des hohlkegelstumpfförmigen, rotationssymmetrischen Scheibenkörpers 4 dicht an die Mündung der zu prüfenden Flasche 1 heranreichen, wodurch eine weitgehend seitliche Bildaufnahme der ein Schraubgewinde besitzenden Mündungsseitenwandfläche möglich ist, d.h. der vollumfänglich von der Mündung auseinanderlaufende Strahlengang S schließt mit der Horizontalen einen spitzen Winkel ein. Aufgrund der Neigung der am unteren Bereich des Körpers 4 vorhandenen Strahlengangeintrittsfläche A und des Außenflächenabschnitts B besitzt der Körper 4 -im Querschnitt gesehen- einen schneidenförmigen unteren Rand.

Die mit A bezeichnete Innenfläche am unteren Rand des Körpers ist rechtwinklig zur Mittelachse des von der Flaschenmündungsseitenwand kommenden Strahlengangs S ausgerichtet, d.h. das Lot der Eintrittsfläche A fluchtet mit der Strahlengangachse. Auf diese Weise wird eine Brechung beim Übergang vom optisch dünneren in das dichtere Medium vermieden. Aus dem gleichen Grund ist die an der Oberseite des Körpers 4 vorhandene, zur Kamera 2 weisende Austrittsfläche E ebenfalls so geneigt, daß sie vom austretenden Strahlengang lotrecht nach oben in Richtung zur Kamera passiert wird.

Ferner besitzt der optische Körper 4 an seiner Außen- und Innenkontur zwei gegenüberliegende, parallel geneigte Flächenabschnitte G und F, die bezüglich der Flaschenmündung so angeordnet sind, daß im Falle einer Beleuchtung der Mündung mit einer oberhalb des Körpers 4 angeordneten Lichtquelle 3d ein Teil des abgestrahlten Lichts den Körper 4 normal zu den Flächenabschnitten G und F ausgerichtet in Richtung zur Flaschenmündung im wesentlichen ohne Brechung passieren kann.

Wenn eine Bodenlichtquelle 3a zum Einsatz kommt, aber keine Flaschenbodeninspektion erforderlich ist bzw. nicht in Verbindung mit der Mündungsseitenwandinspektion erfolgen soll, kann im Hohlraum des Körpers 4 oberhalb des Flächenabschnitts G eine lichtundurchlässige Scheibe 5 eingesetzt werden, damit das senkrecht vom Flaschenboden kommende, durch den Mündungsinnenquerschnitt nach oben austretende Licht nicht in das Kameraobjektiv gelangt.

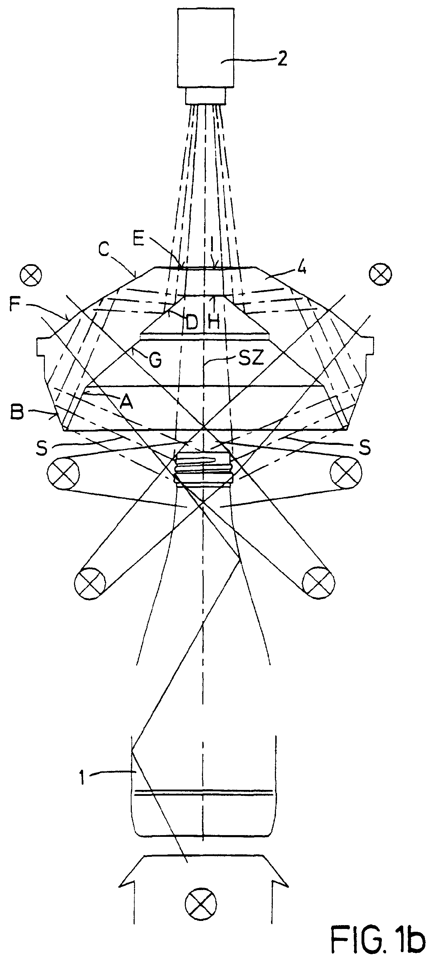

In diesem zuletzt genannten Punkt unterscheidet sich die in Fig. 1b abgebildete Variante des Körpers 4, bei der mittels einer Bodenbeleuchtung auch eine Innenseitenwand-, Boden- und Mündungsdichtflächeninspektion gleichzeitig mit der Gewindekontrolle stattfindet, wobei die vollumfängliche Bildaufnahme der Mündungsseitenwand in der gleichen Weise wie bei der in Fig. la gezeigten Ausführung erfolgt. Bei der Variante nach Fig, 1b befindet sich keine lichtundurchlässige Scheibe im Zentrum des Körpers, so daß das aus der Flaschenmündung und der Mündungsdichtfläche vertikal nach oben austretende Lichtbündel SZ ungehindert durch den Körper 4 hindurch zur Kamera 2 gelangt. Im Unterschied zur Ausführung in Fig. 1a besitzt der Körper 4 nach Fig. 1b an seinem oberen, zentralen Teil an der Außen- und Innenseite zwei horizontale, planparallele Flächen H und I, durch die der vertikale, die Mündung und den Flaschenboden abbildende Lichtstrahl SZ im wesentlichen brechungsfrei durchtreten kann. Wie aus den Abbildungen zu erkennen ist, besitzen die kreisförmig in Umfangsrichtung gekrümmten Flächenabschnitte A, B, C, D, F und G gerade Mantellinien.

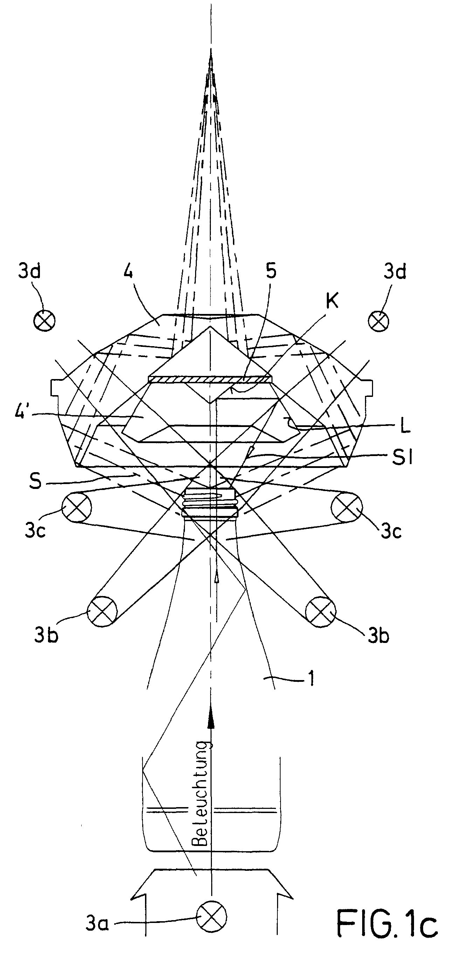

Die in den Fig. 1c bis 1d gezeigten Varianten unterscheiden sich von den Ausführungen nach den Fig. 1a und 1b durch einen zusätzlichen, im Innenraum des Körpers 4 konzentrisch befestigten, z.B. mit Klebstoff, Körper 4'. In Fig. 1c wird von der Bodenlichtquelle 3a kommendes, aus der Flaschenmündung nach oben austretendes Licht vom Körper 4', der ebenfalls aus lichtdurchlässigem Material besteht, durch zweimalige Totalreflexion an zwei kegelförmigen Körperflächen K und L so umgelenkt,dass es schräg von oben auf die Mündungsdichtfläche trifft und diese optimal ausleuchtet.

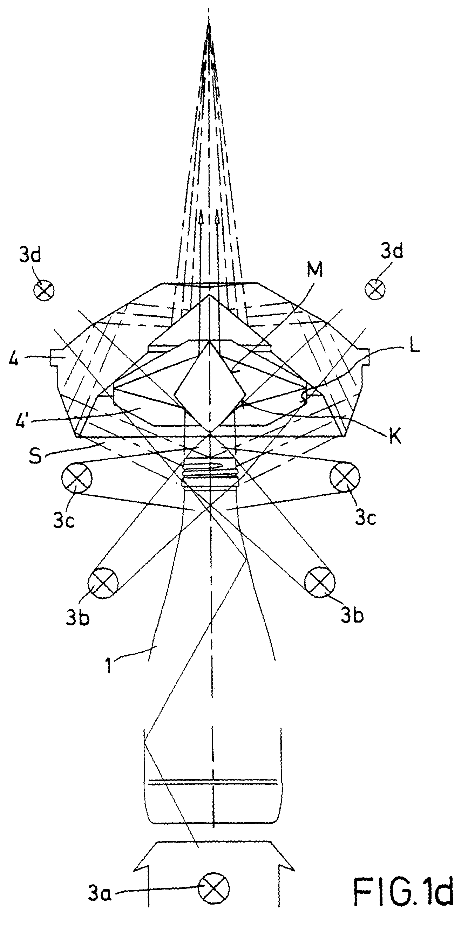

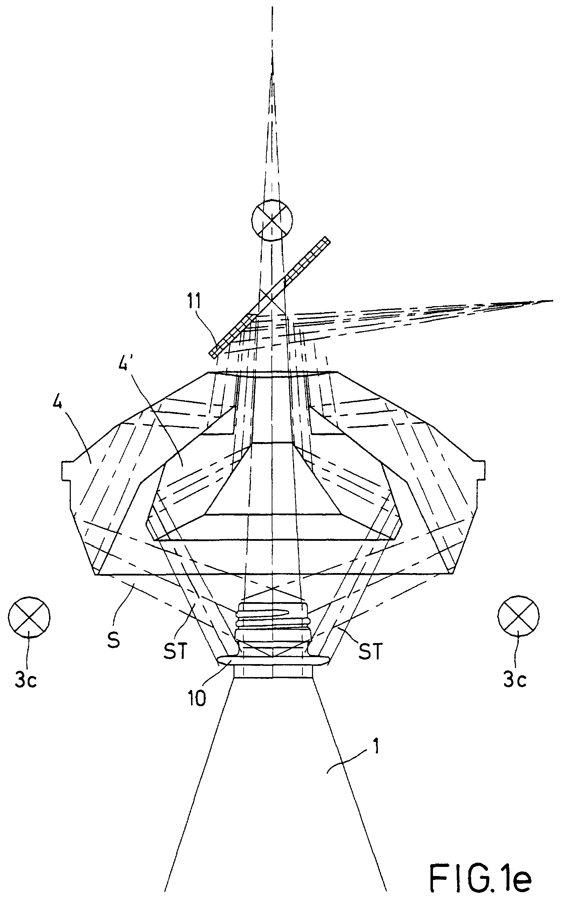

Der Körper 4' in Fig. 1d ist so geformt, dass aus der Flaschenmündung und deren Dichtfläche nach oben austretendes Licht an drei Körperflächen K, L und M jeweils durch Totalreflexion nach oben zur Kamera umgelenkt wird.
In Fig. 1e ist ein Körper 4' dargestellt, der zur Inspektion eines Tragringes 10 im Bereich unterhalb der Mündung dient. Der durch zweifache Totalreflexion gebildete vollumfängliche Strahlengang ST besitzt einen optimalen Auftreffwinkel zum Erkennen von Rissen, Ausbrüchen oder Codes am Tragring. Von einem ringscheibenförmigen Spiegel 11 können die Strahlengänge zur Seite zu einer Kamera abgelenkt werden, so dass von oben, durch das Loch im Spiegelzentrum, eine Flaschenbeleuchtung erfolgen kann.

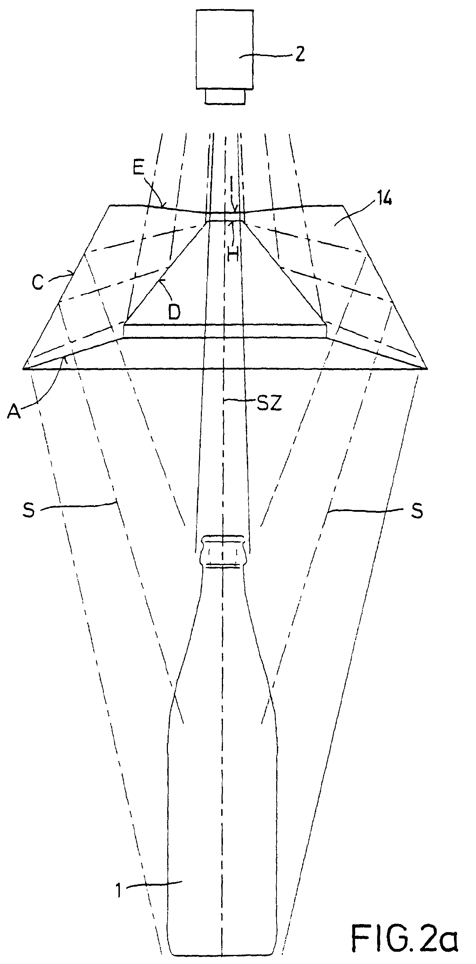

In Fig. 2a ist ein optischer Körper 14 dargestellt, dessen Geometrie bzw. Innen- und Außenkontur so gestaltet ist, daß die Flaschenseitenwand über ihre gesamte Höhe vollumfänglich abgebildet wird. Gleichzeitig können, wie bei der Ausführung nach Fig. 1b, bei entsprechender Beleuchtung auch der Flaschenboden und die Mündungsdichtfläche auf Beschädigungen oder Verschmutzungen überprüft werden. Zu diesem Zweck wird ein zentral ausgerichteter, vertikal verlaufender Strahlengang SZ zur Kamera 2 durch das Zentrum des Körpers 14 geleitet. Der optische Körper besitzt analog zur Ausführung nach Fig. 1b im Zentrum einen horizontalen Abschnitt mit planparallelen Flächen H und I für den senkrecht aus der Flaschenmündung kommenden Strahlengang SZ, der die Mündungsdichtfläche und den Flaschenboden in der Kamera 2 abbildet. Auch hier erfolgt beim Durchtritt des Strahlengangs durch die planparallelen Flächen H und I im wesentlichen keine Brechung.

Wie bei den vorhergehend beschriebenen Ausführungen sind bei dem in Fig. 2a dargestellten optischen Körper 14 die Strahlein- und -austrittsflächen A und E so angeordnet, daß ein die Flaschenseitenwand beinhaltender Strahlengang S diese Flächen normal, d.h. im wesentlichen brechungsfrei passiert. Beim Durchgang durch den optischen Körper 14 erfolgt eine zweifache Umlenkung des Strahlengangs S durch Totalreflexion an einer äußeren und einer inneren, unverspiegelten Fläche des Körpers, wobei ein von der Flaschenaußenwand schräg nach oben verlaufender Strahl S nach dem Eintritt in den optischen Körper 14 zuerst durch die äußere Fläche C radial nach innen zur zweiten, innenliegenden Fläche D und von dieser wiederum nach oben zu einer CCD-Kamera 2 reflektiert wird. Die Beleuchtung der Flasche kann vom Boden und/oder der Seite erfolgen. Die beiden Flächen C und D sind in Umfangsrichtung kreisförmig gekrümmt, besitzen jedoch gerade Mantellinien. Mit dem Körper 14 kann die gesamte Flaschenaußenwand vollumfänglich auf die Kamera 2 projiziert und dort als Kreisfläche abgebildet werden. Die Abbildung wird dann in herkömmlicher Weise zur Erkennung von Beschädigungen oder Verschmutzungen ausgewertet.

Es besteht alternativ die Möglichkeit, den optischen Körper 14 pyramidenstumpfförmig auszubilden, so daß die die Totalreflexion bewirkenden Flächen aus mehreren umfänglich versetzten ebenen Teilflächen bestehen. Mit einer derartigen Kontur bzw. Geometrie können durch Verzerrungen verursachte Abbildungsfehler reduziert werden, die bei gekrümmten Flächen nicht immer ganz vermieden werden können. Diese Ausgestaltung ist auch auf die in den Fig. 1a und 1b dargestellten optischen Körper 4 übertragbar.

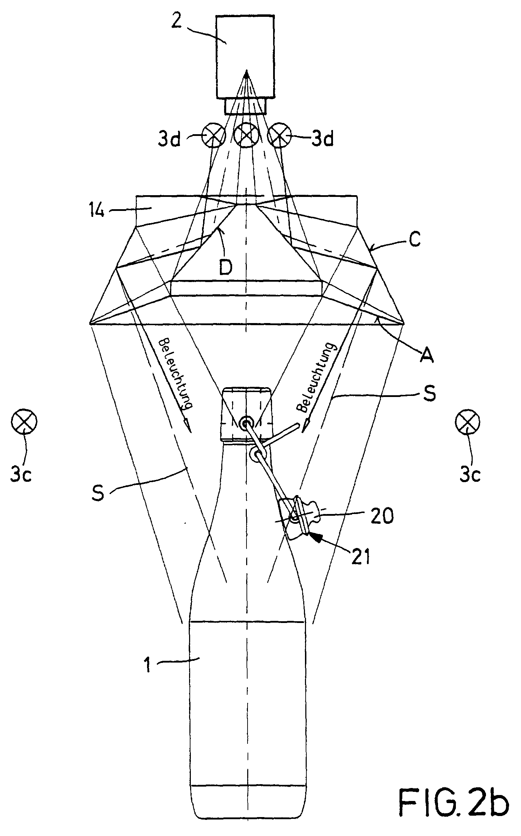

Die Fig. 2b zeigt einen besonders vorteilhaften Anwendungsfall des Körpers 14, mit dem aufgrund der vollumfänglichen Abbildung der Flaschenmantelfläche mit geringstem Aufwand gezielt das Vorhandensein bestimmter Qualitätsmerkmale am Flaschenmantel feststellbar ist, die sich an einer beliebigen Umfangsstelle befinden können, ohne vor der Bildaufnahme eine Ausrichtung der Flasche vornehmen zu müssen, wie das bisher beispielsweise zum Überprüfen des Verschlusses einer Bügelverschlussflasche der Fall war (siehe EP 0512539 B1). Der Körper 14 projiziert die gesamte Schulterfläche einer geöffneten Bügelverschlussflasche auf die Kamera 2, deren zugeordnete Bildauswerteinrichtung dann aus der kreisförmigen Abbildung zunächst die Position des Verschlusskörpers 20 ermittelt, um dann anschließend das Vorhandensein eines Verschlussdichtgummis 21 zu überprüfen. Die Beleuchtung kann, wie im Zusammenhang mit den Fig. 1a, 1b bereits erläutert wurde, durch geeignete Leuchtkörper 3c,3d von der Seite oder von oben erfolgen. Die zu überprüfenden Flaschen können in beliebiger Drehstellung einfach mittels einem Plattenförderband oder dgl. unter dem Körper 14 kontinuierlich vorbeigeführt werden.

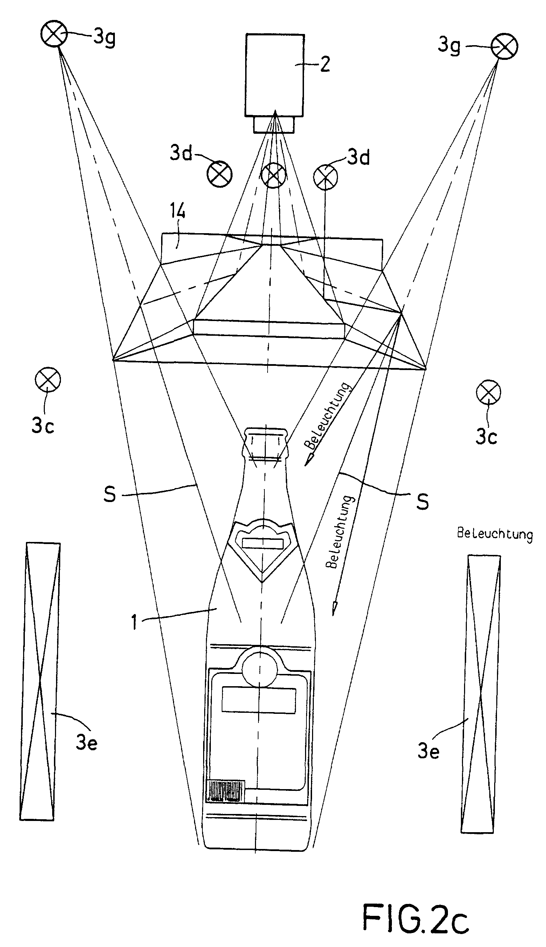

Auf gleiche Weise kann auch eine Etikettenkontrolle erfolgen, um fehlende, schrägsitzende oder falsche Etiketten, d.h. solche mit einem verkehrten Logo oder Barcode zu erkennen (Fig.2c). Auch hier wird zuerst die gesamte Mantelfläche vollumfänglich aufgenommen, um dann aus der Kreisabbildung die Lage der Etiketten zu ermitteln. Für diese Aufgabe können der Bildauswerteinrichtung die korrekte Höhenlage, Form, Ausrichtung bezüglich der Flaschenhochachse, das Logo und der Barcode der Etiketten vorgegeben werden. Die Beleuchtung kann wiederum durch Leuchtkörper 3c,3d,3e,3g von der Seite oder oben erfolgen.

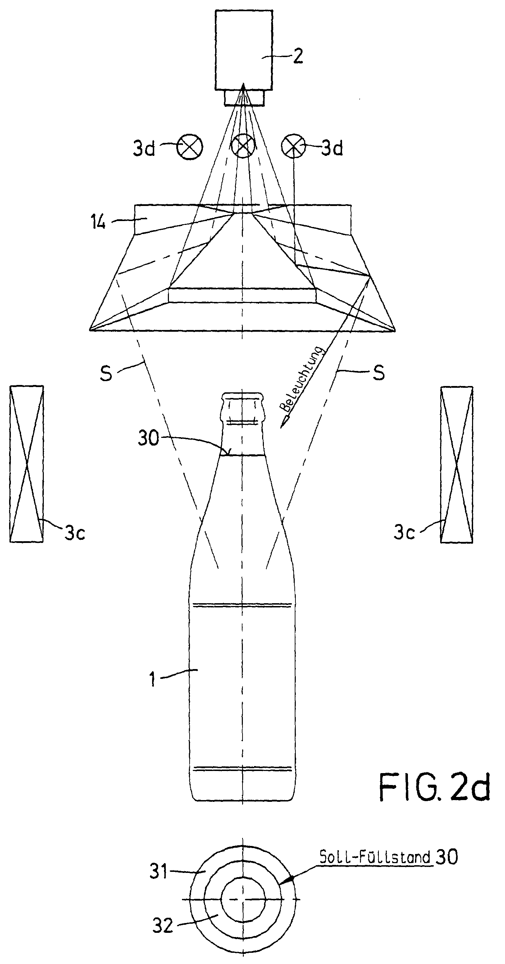

Entsprechend der Fig. 2d kann mit Hilfe des Körpers 14 bei einer gefüllten, aus transparentem Material bestehenden Flasche auch die Höhenlage des Füllspiegels 30 kontrolliert werden, der als eine Kreislinie zwischen zwei Kreisringen 31,32 mit unterschiedlicher Helligkeit in der Abbildung erscheint. Diese Füllspiegelkontrolle ist vorteilhafterweise auch dann möglich, wenn sich im Höhenbereich des Füllspiegels ein Etikett befindet, das die Flasche nur teilumfänglich bedeckt, wobei der etikettenfreie Umfangsbereich zur Bildauswertung herangezogen wird.

## Patentansprüche

1. Inspektionsvorrichtung für Flaschen zum Überprüfen von wenigstens einem Qualitätsmerkmal im Bereich der Mantelfläche einer Flasche oder dgl. mittels der Mantelfläche und einer Bildaufnahmeeinrichtung mit einer zugeordneten Bildauswerteinrichtung, wobei die Mantelfläche, zumindest in dem das Qualitätsmerkmal aufweisenden Höhenabschnitt, **dadurch gekennzeichnet, dass** die Mantelfläche einer Auflichtbeleuchtung unterzogen wird, und dass wenigstens ein von der Mantelfläche kommender Strahlengang, mittels auf die Bildaufnahmeeinrichtung projizierenden optischen Mitteln vollumfänglich erfasst, auf der Bildaufnahmeeinrichtung abgebildet und von der Bildauswerteinrichtung verarbeitet wird.

2. Vorrichtung nach Anspruch 1, **dadurch gekennzeichnet, dass** die Mantelfläche von den optischen Mitteln über ihre gesamte Höhe vollumfänglich erfaßt und abgebildet wird.

3. Vorrichtung nach Anspruch 1 oder 2, **dadurch gekennzeichnet, dass** die Bildauswerteinrichtung aus der vollumfänglichen Abbildung zunächst die Position eines sich an einer beliebigen Umfangs- oder Höhenposition der Flaschenmantelfläche befindenden Qualitätsmerkmals ermittelt und dieses mit einem vorgebbaren Sollwert oder Referenzmuster vergleicht und bei einer unzulässigen Abweichung ein Signal abgibt.

4. Vorrichtung nach einem der Ansprüche 1 bis 3, **dadurch gekennzeichnet, dass** das zu überprüfende Qualitätsmerkmal die Verschlußdichtfläche einer geöffneten Bügelverschlußflasche und/oder ein Etikett an der Mantelfläche einer Flasche oder dgl., insbesondere die Form und/oder die Lage und/oder die Farbe und/oder das Logo und/oder ein Barcode und/oder ein Aufdruck des Etiketts ist.

5. Vorrichtung nach einem der Ansprüche 1 bis 4, **dadurch gekennzeichnet, dass** das zu überprüfende Qualitätsmerkmal der Füllspiegel einer aus transparentem Material bestehenden Flasche ist.

6. Vorrichtung nach einem der Ansprüche 1 bis 5, **dadurch gekennzeichnet, dass** die optischen Mittel stationär oberhalb der mittels einer Transporteinrichtung kontinuierlich vorbeiführbaren Flaschen oder dgl. angeordnet und vorzugsweise als ein aus lichtdurchlässigem Material bestehender, insbesonders nach wenigstens einem der Ansprüche 1 bis 30 ausgebildeter optischer Körper sind.

7. Vorrichtung nach wenigstens einem der Ansprüche 1 bis 6, **dadurch gekennzeichnet, dass** die Vorrichtung wenigstens eine Lichtquelle (3) zum Beleuchten der Flaschen, ein Bildaufnahmeelement (2) mit einer zugeordneten Bildauswerteinrichtung und einen optischen Körper (4, 14) aus lichtdurchlässigem Material aufweist, wobei der optische Körper einstückig ausgebildet und dessen Kontur so gestaltet ist, daß ein eine beleuchtete Flasche (1) zumindest bereichsweise vollumfänglich abbildender Strahlengang (S) entsteht, dessen Licht beim Passieren des optischen Körpers (4, 14) mehrfach durch innere Totalreflexion umgelenkt wird.

8. Vorrichtung nach Anspruch 7, **dadurch gekennzeichnet, daß** die Eintritts- und/oder Austrittsfläche (A, E) des optischen Körpers (4, 14) rechtwinklig zu der Achse des von dem abzubildenden Flaschenbereich kommenden Abschnitts des Strahlengangs (S) bzw. des zu dem Bildaufnahmeelement (2) führenden Abschnitts des Strahlengangs (S) ausgerichtet ist.

9. Vorrichtung nach Anspruch 7 oder 8, **dadurch gekennzeichnet, daß** ein insbesondere für eine Gewinde- und/oder Mündungsseitenwandinspektion verwendbarer optischer Körper (4) zwei Außenflächenabschnitte (B, C) und einen Innenflächenabschnitt (D) aufweist, die derart zueinander geneigt ausgerichtet sind, daß an diesen Abschnitten jeweils eine Totalreflexion eines Strahlengangs (S) erfolgt.

10. Vorrichtung nach Anspruch 9, **dadurch gekennzeichnet, daß** die zwei Außenflächenabschnitte (B, C) höhenmäßig übereinander versetzt, gegensinnig geneigt angeordnet sind.

11. Vorrichtung nach Anspruch 9 und 10, **dadurch gekennzeichnet, daß** ein von der beleuchteten Flasche (1) kommender Strahlengang (S) dessen Achse zur Mündungsebene bzw. Horizontalen mit einem spitzen Winkel (α) im Bereich zwischen 15 bis 30 Grad, insbesondere 27 Grad, geneigt verläuft, zuerst auf den ersten, untenliegenden Außenflächenabschnitt (B) trifft, dort zum höherliegenden zweiten Außenflächenabschnitt (C) und von diesem zum Innenflächenabschnitt (D) reflektiert wird, der wiederum eine zum Bildaufnahmeelement (2) gerichtete Totalreflexion bewirkt.

12. Vorrichtung nach Anspruch 11, **dadurch gekennzeichnet, daß** die Neigung des Innenflächenabschnitts (D) so gewählt ist, daß der die Flasche wenigstens bereichsweise vollumfänglich abbildende Strahlengang zum Bildaufnahmeelement (2) konvergiert.

13. Vorrichtung nach einem der Ansprüche 7 bis 12, **dadurch gekennzeichnet, daß** der optische Körper (4, 14) eine zur Flasche (1) gerichtete Lichteintrittsfläche (A) für den von der abzubildenden Flasche kommenden Strahlengang (S) aufweist und diese mit dem ersten, die erste Totalreflexion bewirkenden Aussenflächenabschnitt (B) einen schneidenförmigen, unteren Rand am optischen Körper (4, 14) bildet.

14. Vorrichtung nach einem der Ansprüche 7 bis 13, **dadurch gekennzeichnet, daß** der Körper (4, 14) einen oberhalb der Flaschenmündung angeordneten unteren Rand aufweist.

15. Vorrichtung nach einem der Ansprüche 7 bis 14, **dadurch gekennzeichnet, daß** der optische Körper (4, 14) als geschlossener, im wesentlichen scheibenartiger Körper mit einem haubenförmigen vertikalen Querschnitt ausgebildet ist.

16. Vorrichtung nach einem der vorhergehenden Ansprüche 7 bis 15, **dadurch gekennzeichnet, daß** der optische Körper (4, 14) einen von seiner Unterseite in Richtung zur Oberseite sich verjüngenden Hohlraum aufweist, dessen Zentrumsbereich eine Sperre (5) gegen axialen Lichtdurchgang von der Flaschenmündung zu dem koaxial darüber angeordneten Bildaufnahmeelement (2) aufweist, insbesondere wenn die Flasche (1) vom Flaschenboden her beleuchtet wird.

17. Vorrichtung nach einem der Ansprüche 7 bis 16, **dadurch gekennzeichnet, daß** eine Lichtquelle (3a), insbesondere Stroboskoplampe, unterhalb der Flasche (1) positioniert ist und den Flaschenboden beleuchtet.

18. Vorrichtung nach einem der Ansprüche 7 bis 16, **dadurch gekennzeichnet, daß** eine Lichtquelle (3b) seitlich unterhalb des zu prüfenden Flaschenumfangsabschnitts angeordnet ist und diesen von außen schräg nach oben in Richtung zur Flaschenmündung gerichtet beleuchtet.

19. Vorrichtung nach einem der Ansprüche 7 bis 16, **dadurch gekennzeichnet, daß** eine Lichtquelle (3c) seitlich neben dem zu prüfenden Flaschenumfangsabschnitt angeordnet ist und diesen von außen beleuchtet.

20. Vorrichtung nach einem der Ansprüche 7 bis 16, **dadurch gekennzeichnet, daß** eine Lichtquelle (3d) oberhalb der Flaschenmündung angeordnet ist und den zu prüfenden Flaschenumfangsabschnitt schräg von oben beleuchtet.

21. Vorrichtung nach Anspruch 20, **dadurch gekennzeichnet, daß** die Lichtquelle (3d) oberhalb des optischen Körpers (4) angeordnet ist und den zu prüfenden Flaschenumfangsabschnitt durch den optischen Körper (4) hindurch beleuchtet, wobei die Lichtquelle (3d) vorzugsweise ringförmig ausgebildet ist.

22. Vorrichtung nach Anspruch 21, **dadurch gekennzeichnet, daß** der Eintritts-(F) und Austrittsflächenabschnitt (G) für die Lichtquelle (3d) am optischen Körper (4) so ausgebildet sind, daß die von der Lichtquelle (3d) kommenden Lichtstrahlen die Flächenabschnitte (F, G) lotrecht passieren.

23. Vorrichtung nach Anspruch 16, **dadurch gekennzeichnet, daß** eine Lichtquelle im Hohlraum des optischen Körpers (4) angeordnet ist.

24. vorrichtung nach einem der vorhergehenden Ansprüche 7 bis 23, **dadurch gekennzeichnet, daß** der optische Körper (4, 14) koaxial zur optischen Achse des Bildaufnahmeelements (2) ausgerichtet ist und die Bildaufnahme dann erfolgt, wenn die Flaschenhochachse im wesentlichen mit der optischen Achse des Bildaufnahmeelements (2) fluchtet.

25. Vorrichtung nach einem der vorhergehenden Ansprüche 7 bis 24, **dadurch gekennzeichnet, daß** das Bildaufnahmeelement (2) eine CCD-Kamera mit einem Objektiv ist, insbesondere einer telezentrischen Optik.

26. Vorrichtung nach einem der vorhergehenden Ansprüche 7 bis 25, **dadurch gekennzeichnet, daß** die Kontur des optischen Körpers (4) so gestaltet ist, daß der Mündungsseitenwandbereich einer Flasche (1) vollumfänglich erfaßt wird, insbesondere auch ein in diesem Bereich vorhandenes Schraubgewinde.

27. Vorrichtung nach einem der Ansprüche 7 bis 25, **dadurch gekennzeichnet, daß** die Kontur des optischen Körpers (14) so gestaltet ist, daß die Flaschenseitenwand über ihre gesamte Höhe vollumfänglich erfaßt wird.

28. Vorrichtung nach einem der vorhergehenden Ansprüche 7 bis 27, **dadurch gekennzeichnet, daß** der optische Körper (4, 14) für eine Innenseitenwand- und/oder Boden- und/oder Mündungsdichtflächenkontrolle im Zentrum zwei planparallele Flächen (H, I) oder eine Öffnung aufweist.

29. Vorrichtung nach einem der vorhergehenden Ansprüche 7 bis 28, **dadurch gekennzeichnet, daß** der optische Körper (4, 14) rotationssymmetrisch ausgebildet ist.

30. Vorrichtung nach einem der vorhergehenden Ansprüche 7 bis 28, **dadurch gekennzeichnet, daß** der optische Körper die Kontur eines Pyramidenstumpfs, insbesondere Hohlpyramidenstumpfs, aufweist.

31. vorrichtung nach einem der vorhergehenden Ansprüche 7 bis 30, **dadurch gekennzeichnet, daß** die eine Totalreflexion eines Strahlengangs (S) bewirkenden Flächenabschnitte (B, C, D) des optischen Körpers (4, 14) gerade Mantellinien aufweisen.

32. Vorrichtung nach einem der vorhergehenden Ansprüche 7 bis 31, **dadurch gekennzeichnet, dass** ein optischer Körper so ausgebildet ist, dass wenigstens zwei, unterschiedlich zur Flaschenhochachse geneigte Strahlengänge erzeugt werden.

33. Vorrichtung nach Anspruch 32, **dadurch gekennzeichnet, dass** ein erster Strahlengang zur Abbildung und ein zweiter Strahlengang zur Beleuchtung einer Flasche verwendet wird.

34. Vorrichtung nach Anspruch 33, **dadurch gekennzeichnet, dass** die Mündung einer offenen Flasche durch einen Strahlengang abgebildet wird, wobei die Flasche am Boden beleuchtet wird.

35. Vorrichtung nach Anspruch 32, **dadurch gekennzeichnet, dass** ein Strahlengang die Stirnfläche und/oder einen Halskragen einer Flasche und ein oder mehrere weitere Strahlengänge die Mantelfläche der selben Flasche vollumfänglich bereichsweise oder vollflächig abbilden, vorzugsweise den Mündungsseitenwandbereich.

36. Vorrichtung nach einem der vorhergehenden Ansprüche 32 bis 35, **dadurch gekennzeichnet, dass** der optische Körper aus mehreren konzentrisch angeordneten Einzelkörpern besteht.

## Claims

1. Device for inspecting bottles in order to check at least one quality feature in the region of the surface area of a bottle or the like, by means of the surface area and an image recording device with an associated image evaluating device, wherein the surface area, at least in the height section that has the quality feature, **characterised in that** the surface area is subjected to incident light illumination, and **in that** at least one beam path coming from the surface area, projected by means of optical means onto the image recording device, captures it to the full circumferential extent, images it on the image recording device and processes it in the image evaluating device.

2. Device according to claim 1, **characterised in that** the surface area is captured to its full circumferential extent, by the optical means, over its entire height, and thus imaged.

3. Device according to claim 1 or 2, **characterised in that** the image evaluating device first detects the position of a quality feature present at any circumferential or height position of the surface area of the bottle, and compares it with a predeterminable desired value or reference sample, and delivers a signal in case of an inadmissible deviation.

4. Device according to one of claims 1 to 3, **characterised in that** the quality feature to be checked is the closure sealing surface of an open clip lock bottle and/or a label on the surface area of a bottle or the like, especially the shape and/or the position and/or the colour and/or the logo and/or a bar code and/or printing on the label.

5. Device according to one of claims 1 to 4, **characterised in that** the quality feature to be checked is the filling level of a bottle that consists of transparent material.

6. Device according to one of claims 1 to 5, **characterised in that** the optical means is arranged fixed in position above bottles or the like that can be continuously moved past by means of a conveyor device and is preferably constructed as an optical body consisting of light pervious material especially one according to at least one of claims 1 to 30.

7. Device according to at least one of claims 1 to 6, **characterised in that** the device has: at least one light source (3) for illuminating the bottles, an image recording element (2) with an associated image evaluating device, and an optical body (4, 14) of light pervious material; wherein the optical body is constructed in one piece and its contour is so formed that a beam path (S) comes about, imaging, to its full circumferential extent at least some regions of an illuminated bottle (1), and whose light is repeatedly deviated by total internal reflection during its passage through the optical body (4, 14).

8. Device according to claim 7, **characterised in that** the entry and/or exit surfaces (A, E) of the optical body (4, 14) are oriented at right angles with respect to the axis of the section of the beam path (S) coming from the region of the bottle that is to be imaged, respectively the section of the beam path (S) leading to the image recording element (2).

9. Device according to claim 7 or 8, **characterised in that** an optical body (4), especially one usable for inspection of the threads and/or side wall of the mouth, has two outer surface sections (B, C) and one inner surface section (D) which are oriented inclined with respect to each other such that total reflection of the beam path (S) results at these respective sections.

10. Device according to claim 9, **characterised in that** the two outer surface sections (B, C) are arranged offset as regards height one above the other and inclined in opposite directions.

11. Device according to claim 9 and 10, **characterised in that** a beam path (S) coming from the illuminated bottle (1), whose axis extends at an acute angle (α) inclined in the range of 15 to 30 degrees, especially 27 degrees, with respect to the plane of the mouth respectively to the horizontal, first strikes the first, lower positioned outer surface section (B), there is reflected to the second, higher positioned outer surface section (C) and from the latter is reflected to the inner surface section (D) which in turn effects total reflection directed towards the image recording element (2).

12. Device according to claim 11, **characterised in that** the inclination of the inner surface section (D) is so selected that the beam path which images the bottle, to its full circumferential extent, in at least some regions, converges towards the image recording element (2).

13. Device according to one of claims 7 to 12, **characterised in that** the optical body (4, 14) has a light entry surface (A) directed towards the bottle (1) for the beam path (S) coming from the bottle to be imaged, forming a knife shaped lower edge on the optical body (4, 14) with the first outer surface section (B) which effects the first total reflection.

14. Device according to one of claims 7 to 13, **characterised in that** the body (4, 14) has a lower edge arranged above the mouth of the bottle.

15. Device according to one of claims 7 to 14, **characterised in that** the optical body (4, 14) is constructed as a closed, essentially disc like body, domed in vertical section.

16. Device according to one of the preceding claims 7 to 15, **characterised in that** the optical body (4, 14) has a cavity narrowing from its bottom in the direction towards the top whose central region has a light stop (5) against axial passage of light from the mouth of the bottle to the image recording element (2) arranged axially above it, especially if the bottle (1) is illuminated from the bottom of the bottle.

17. Device according to one of claims 7 to 16, **characterised in that** a light source (3a), especially a stroboscopic lamp, is positioned beneath the bottle (1) and illuminates the bottom of the bottle.

18. Device according to one of claims 7 to 16, **characterised in that** a light source (3b) is arranged to the side below the bottle's circumferential section that is to be checked and illuminates the latter from outside upwardly at an angle in the direction towards the mouth of the bottle.

19. Device according to one of claims 7 to 16, **characterised in that** a light source (3c) is arranged to the side next to the bottle's circumferential section that is to be checked and illuminates it from the outside.

20. Device according to one of claims 7 to 16, **characterised in that** a light source (3d) is arranged above the mouth of the bottle and illuminates, from above, at an angle, the bottle's circumferential section that is to be checked.

21. Device according to claim 20, **characterised in that** the light source (3d) is arranged upwardly of the optical body (4) and illuminates, via the optical body (4), through it, the bottle's circumferential section that is to be checked, the light source (3d) being preferably constructed ring shaped.

22. Device according to claim 21, **characterised in that** the entry surface section (F) and the exit surface section (G) for the light source (3d) on the optical body (4) are so constructed that the light beams coming from the light source (3d) pass through the surface sections (F, G) at right angles.

23. Device according to claim 16, **characterised in that** a light source is arranged in the cavity of the optical body (4).

24. Device according to one of the preceding claims 7 to 23, **characterised in that** the optical body (4, 14) is oriented coaxially with respect to the optical axis of the image recording element (2) and the image recording is then effected when the vertical axis of the bottle substantially coincides with the optical axis of the image recording element (2).

25. Device according to one of the preceding claims 7 to 24, **characterised in that** the image recording element (2) is a CCD camera with an objective, especially a telecentric lens system.

26. Device according to one of the preceding claims 7 to 25, **characterised in that** the contour of the optical body (4) is so formed that the region of the side wall of the mouth of a bottle (1) is captured to its full circumferential extent, especially also a screw thread present in this region.

27. Device according to one of the preceding claims 7 to 25, **characterised in that** the contour of the optical body (14) is so formed that the side wall of the bottle is captured to its full circumferential extent along its entire height.

28. Device according to one of the preceding claims 7 to 27, **characterised in that** the optical body (4, 14), for monitoring an inner side wall and/or bottom and/or sealing surface at the mouth, has, in its centre, two parallel surfaces (H, I) or an opening.

29. Device according to one of the preceding claims 7 to 28, **characterised in that** the optical body (4, 14) is constructed rotationally symmetrical.

30. Device according to one of the preceding claims 7 to 28, **characterised in that** the optical body has the contour of a truncated pyramid, especially a hollow truncated pyramid.

31. Device according to one of the preceding claims 7 to 30, **characterised in that** the surface sections (B, C, D) of the optical body (4, 14), which cause total reflection of a beam path (S), have straight surface lines.

32. Device according to one of the preceding claims 7 to 31, **characterised in that** an optical body is so constructed that at least two beam paths are produced which are inclined at different angles with respect to the vertical axis of the bottle.

33. Device according to claim 32, **characterised in that** a first beam path is used for imaging and a second beam path for illuminating a bottle.

34. Device according to claim 33, **characterised in that** the mouth of an open bottle is imagined by a beam path, the bottle being illuminated at the bottom.

35. Device according to claim 32, **characterised in that** a beam path serves for imaging the end face and/or a neck collar of a bottle and one or more further beam paths the surface area of the same bottle to its full circumferential extent in some regions or its entire surface, preferably the region of the side wall of the mouth.

36. Device according to one of the preceding claims 32 to 35, **characterised in that** the optical body consists of a plurality of separate bodies arranged concentrically.

## Revendications

1. Dispositif d'inspection destiné à des bouteilles pour vérifier au moins une caractéristique de qualité dans la zone de surface latérale d'une bouteille ou d'objets analogues en utilisant la surface latérale et une installation de prise de vue comportant une installation associée d'exploitation des images,
**caractérisé en ce que**
la surface latérale est éclairée par de la lumière incidente, à l'aide de moyens optiques qui assurent la projection sur l'installation de prise de vue, au moins une trajectoire de rayons provenant de la surface latérale opère une détection sur toute la périphérie de la surface latérale, au moins à la hauteur où se trouve la caractéristique de qualité, cette surface latérale étant reproduite sur l'installation de prise de vue et traitée par l'installation d'exploitation des images.

2. Dispositif selon la revendication 1.
**caractérisé en ce que**
la surface latérale est examinée et reproduite sur toute sa périphérie et sur toute sa hauteur par les moyens optiques.

3. Dispositif selon la revendication 1 ou 2,
**caractérisé en ce qu'**
à partir de la reproduction périphérique complète, l'installation d'exploitation des images détermine d'abord la position d'une caractéristique de qualité située sur la surface latérale de la bouteille à un endroit quelconque de la périphérie ou de la hauteur et compare la caractéristique de qualité à une valeur exigée prédéfinissable ou à un modèle de référence puis émet un signal en cas de différence inadmissible.

4. Dispositif selon l'une des revendications 1 à 3,
**caractérisé en ce que**
la caractéristique de qualité à vérifier est l'étanchéité de la surface obturant une bouteille à bouchon mécanique et/ou l'étiquette sur la surface latérale d'une bouteille ou d'un objet analogue, en particulier la forme et/ou la position et/ou la couleur et/ou le logo et/ou le code-barres et/ou le libellé de l'étiquette.

5. Dispositif selon l'une des revendications 1 à 4,
**caractérisé en ce que**
la caractéristique de qualité à vérifier est le niveau de remplissage d'une bouteille en matériau transparent.

6. Dispositif selon l'une des revendications 1 à 5,
**caractérisé en ce que**
les moyens optiques sont fixes au-dessus des bouteilles ou des objets analogues apportés en continu à l'aide d'une installation de transport et constituent de préférence un corps optique en matériau transparent, en particulier conçu selon au moins une des revendications 1 à 30.

7. Dispositif selon au moins l'une des revendications 1 à 6,
**caractérisé en ce que**
le dispositif comporte au moins une source lumineuse (3) pour éclairer les bouteilles, un élément de prise de vue (2) comportant une installation associée d'exploitation des images et un corps optique (4, 14) en matériau transparent, le corps optique étant constitué d'une seule pièce et son contour étant tel qu'on obtient une trajectoire de rayons (S) qui reproduit sur tout son pourtour au moins certaines zones d'une bouteille (1) éclairée et dont la lumière est déviée plusieurs fois par réflexion intérieure totale en traversant le corps optique (4, 14).

8. Dispositif selon la revendication 7.
**caractérisé en ce que**
la surface d'entrée et/ou de sortie (A, B) du corps optique (4, 14) est orientée perpendiculairement à l'axe de la trajectoire des rayons (S), c'est-à-dire du segment de trajectoire des rayons (S) provenant de la zone de bouteille à reproduire ou du segment menant à l'élément de prise de vue (2).

9. Dispositif selon la revendication 7 ou 8,
**caractérisé en ce qu'**
un corps optique (4), utilisable en particulier pour inspecter un filetage et/ou une paroi latérale d'embouchure, comporte deux segments superficiels extérieurs (B, C) et un segment superficiel intérieur (D) inclinés les uns par rapport aux autres de telle manière qu'une trajectoire des rayons (S) est à chaque fois totalement réfléchie sur ces segments.

10. Dispositif selon la revendication 9,
**caractérisé en ce que**
les deux segments superficiels extérieurs (B, C) sont décalés en hauteur l'un par rapport à l'autre et inclinés en sens contraire.

11. Dispositif selon les revendications 9 et 10,
**caractérisé en ce qu'**
une trajectoire de rayons (S) issue de la bouteille (1) éclairée et dont l'axe par rapport au plan de l'embouchure ou à l'horizontale est incliné d'un angle (α) compris entre 15 et 30 degrés, en particulier de 27 degrés, atteint d'abord le premier segment superficiel extérieur (B) situé en bas, y est réfléchi vers le deuxième segment superficiel extérieur (C) placé plus haut et de celui-ci vers le segment superficiel intérieur (D) qui provoque de nouveau une réflexion totale orientée vers l'élément de prise de vue (2)

12. Dispositif selon la revendication 11,
**caractérisé en ce que**
le segment superficiel intérieur (D) a une inclinaison choisie de manière à ce que la trajectoire des rayons qui reproduit la bouteille au moins par endroits sur toute sa périphérie converge vers l'élément de prise de vue (2.)

13. Dispositif selon l'une des revendications 7 à 12,
**caractérisé en ce que**
le corps optique (4, 14) comporte une surface d'entrée de lumière (A), orientée vers la bouteille (1) et destinée à la trajectoire des rayons (S) issue de la bouteille à reproduire, et la trajectoire des rayons forme, avec le premier segment superficiel extérieur (B) qui provoque la réflexion totale, un bord inférieur en forme de lame sur le corps optique (4, 14).

14. Dispositif selon l'une des revendications 7 à 13,
**caractérisé en ce que**
le corps (4, 14) comporte un bord inférieur situé au-dessus de l'embouchure de la bouteille.

15. Dispositif selon l'une des revendications 7 à 14,
**caractérisé en ce que**
le corps optique (4, 14) est un corps fermé pratiquement en forme de plaque dont la section transversale verticale a une forme de capot.

16. Dispositif selon l'une des revendications précédentes 7 à 15.
**caractérisé en ce que**
le corps optique (4, 14) comporte un espace creux se rétrécissent du côté inférieur vers le côté supérieur et dont la zone centrale comporte un obstacle (5) contre le passage axial de la lumière depuis l'embouchure de la bouteille jusqu'à l'élément de prise de vue (2) coaxial au-dessus d'elle, en particulier quand la bouteille (1) est éclairée par le fond.

17. Dispositif selon l'une des revendications 7 à 16,
**caractérisé en ce que**
une source lumineuse (3a), en particulier une lampe stroboscopique, est placée sous la bouteille (1) et en éclaire le fond.

18. Dispositif selon l'une des revendications 7 à 16,
**caractérisé en ce que**
une source lumineuse (3b) se trouve latéralement au-dessous du segment périphérique de bouteille à contrôler et l'éclaire de l'extérieur obliquement vers le haut en direction de son embouchure.

19. Dispositif selon l'une des revendications 7 à 16,
**caractérisé en ce que**
une source lumineuse (3c) se situe latéralement au voisinage du segment périphérique de bouteille à contrôler et l'éclaire de l'extérieur.

20. Dispositif selon l'une des revendications 7 à 16,
**caractérisé en ce qu'**
une source lumineuse (3d) qui se situe au-dessus de l'embouchure de la bouteille, éclaire obliquement d'en haut le segment périphérique de bouteille à contrôler.

21. Dispositif selon la revendication 20,
**caractérisé en ce que**
la source lumineuse (3d) qui se situe au-dessus du corps optique (4), éclaire le segment périphérique de bouteille à contrôler à travers le corps optique (4), cette source lumineuse (3d) étant de préférence annulaire.

22. Dispositif selon la revendication 21.
**caractérisé en ce que**
les segments superficiels d'entrée (F) et de sortie (G) pour la source lumineuse (3d) sur le corps optique (4) sont conçus de telle manière que les rayons lumineux issus de la source lumineuse (3d) les traversent perpendiculairement.

23. Dispositif selon la revendication 16,
**caractérisé en ce que**
une source lumineuse se trouve dans l'espace creux du corps optique (4).

24. Dispositif selon l'une des revendications précédentes 7 à 23,
**caractérisé en ce que**
le corps optique (4, 14) est orienté coaxialement à l'axe optique de l'élément de prise de vue (2) et la prise de vue a lieu quand l'axe vertical de la bouteille est pratiquement aligné avec l'axe optique de l'élément de prise de vue (2).

25. Dispositif selon l'une des revendications précédentes 7 à 24,
**caractérisé en ce que**
l'élément de prise de vue (2) est une caméra CCD (linéaire à transfert de charges) munie d'un objectif, en particulier d'une optique télécentrique.

26. Dispositif selon l'une des revendications précédentes 7 à 25,
**caractérisé en ce que**
le contour du corps optique (4) est structuré de telle manière que la zone de paroi latérale de l'embouchure d'une bouteille (1) est examinée sur toute la périphérie, et particulièrement le filetage de vis situé dans cette zone.

27. Dispositif selon l'une des revendications 7 à 25,
**caractérisé en ce que**
le contour du corps optique (14) est structuré de telle manière que la paroi latérale de la bouteille est examine sur toute sa périphérie et sur toute sa hauteur.

28. Dispositif selon l'une des revendications précédentes 7 à 27,
**caractérisé en ce que**
le corps optique (4, 14), destiné à contrôler la paroi latérale intérieure et/ou le fond et/ou la surface d'étanchéité à l'embouchure, comporte au centre deux surfaces (H, I) parallèles et planes ou une ouverture.

29. Dispositif selon l'une des revendications précédentes 7 à 28,
**caractérisé en ce que**
le corps optique (4, 14) a une symétrie de rotation.

30. Dispositif selon l'une des revendications précédentes 7 à 28,
**caractérisé en ce que**
le contour du corps optique est celui d'une pyramide tronquée, en particulier d'une pyramide creuse tronquée.

31. Dispositif selon l'une des revendications précédentes 7 à 30,
**caractérisé en ce que**
les segments superficiels (B, C, D) du corps optique (4, 14) qui réfléchissent totalement une trajectoire de rayons (S) ont des génératrices rectilignes.

32. Dispositif selon l'une des revendications précédentes 7 à 31,
**caractérisé en ce que**
le corps optique est conçu de manière à produire au moins deux trajectoires des rayons différemment inclinées par rapport à l'axe vertical de la bouteille.

33. Dispositif selon la revendication 32,
**caractérisé en ce qu'**
on utilise une première trajectoire des rayons pour reproduire une bouteille et une deuxième trajectoire des rayons pour l'éclairer.

34. Dispositif selon la revendication 33.
**caractérisé en ce que**
l'embouchure d'une bouteille ouverte est reproduite par une trajectoire de rayons, la bouteille étant éclairée par le fond.

35. Dispositif selon la revendication 32,
**caractérisé en ce qu'**
une trajectoire des rayons reproduit la surface frontale et/ou le col d'une bouteille et une ou plusieurs autres trajectoires de rayons reproduit/reproduisent la surface latérale de la même bouteille sur toute sa périphérie, soit par endroits soit sur toute la surface, de préférence la zone de paroi latérale de son embouchure.

36. Dispositif selon l'une des revendications précédentes 32 à 35,
**caractérisé en ce que**
le corps optique comprend plusieurs corps particuliers concentriques.
